# EUROPEAN PATENT APPLICATION

(11) **EP 4 617 340 A1**
(43) Date of publication of application: **17.09.2025**
(21) Application number: 23888769.9
(22) Date of filing: 09.11.2023
(51) Int. Cl.: C09J 201/10, C09J 7/38, C09J 11/06

(54) **ADHESIVE BODY**

(30) Priority: 11.11.2022 JP 2022181324
(71) Applicant: NITTO DENKO CORPORATION, Ibaraki-shi Osaka 567-8680 (JP)
(72) Inventor: MORISHITA Hiromitsu, Ibaraki-shi, Osaka 567-8680 (JP); SHIMOKAWA Kayo, Ibaraki-shi, Osaka 567-8680 (JP); TSUKAMOTO Narumi, Ibaraki-shi, Osaka 567-8680 (JP)
(74) Representative: Gill Jennings & Every LLP
(86) International application number: PCT/JP2023/040415
(87) International publication number: WO 2024/101424

(57) **Abstract**

The present invention provides an adhesive body in which a reduction in adhesive force after the adhesive body is stored and transported is prevented even in a configuration in which a release liner is not provided. The present invention relates to an adhesive body including an adhesive, in which an adhesive composition forming the adhesive contains a base polymer and a tackifying resin having a weight average molecular weight of 1,500 or less.

## Description

### TECHNICAL FIELD

The present invention relates to an adhesive body.

### BACKGROUND ART

A threadlike adhesive body containing a core material and an adhesive is generally an adhesive body made by coating a periphery of the core material with the adhesive, and is thin and capable of conforming to a complex shape. When the threadlike adhesive body is to be stored and transported, the threadlike adhesive body can be formed into a wound body formed by winding the threadlike adhesive body in a cylindrical shape using a bobbin as necessary, and a release liner is not required, which can contribute to a reduction of waste during a process.

As the threadlike adhesive body, for example, Patent Literature 1 discloses a linear adhesive body having a small gel fraction change amount after aging. In addition, Patent Literature 2 discloses a threadlike adhesive body having a strong adhesive force in which four or more multifilaments are used as a core material.

### CITATION LIST

### PATENT LITERATURE

Patent Literature 1: JP2020-19923A
Patent Literature 2: JP2020-76066A

### SUMMARY OF INVENTION

### TECHNICAL PROBLEM

Since the adhesive body has a configuration in which a release liner is not provided, there is a problem that storage and transportation of the adhesive body cause a reduction in adhesive force. In Patent Literatures 1 and 2, sufficient studies have not been conducted on such a problem of maintaining the adhesive force.

The present invention has been made in view of the above conventional circumstances, and an object of the present invention is to provide an adhesive body that does not cause a reduction in adhesive force after being stored and transported even in a configuration in which the adhesive body does not have a release liner.

### SOLUTION TO PROBLEM

As a result of intensive studies to solve the above problem, the present inventors have found that the above problem can be solved in a case where in an adhesive body including an adhesive, an adhesive composition forming the adhesive contains a base polymer and a tackifying resin having a weight average molecular weight of 1,500 or less, and have completed the present invention.

That is, the present invention relates to the following.
[1] An adhesive body including an adhesive, in which an adhesive composition forming the adhesive contains a base polymer and a tackifying resin having a weight average molecular weight of 1,500 or less.
[2] The adhesive body according to [1], in which the tackifying resin has a weight average molecular weight of 1,000 or less.
[3] The adhesive body according to [1], further including a core material, in which the adhesive covers a surface of the core material in a longitudinal direction.
[4] The adhesive body according to [1] or [2], in which the adhesive body is a threadlike adhesive body.
[5] The adhesive body according to [3], in which the core material is formed of four or more filaments.
[6] The adhesive body according to [1] or [2], in which a content of the tackifying resin in the adhesive composition is 5 parts by mass to 100 parts by mass with respect to 100 parts by mass of the base polymer.

### ADVANTAGEOUS EFFECTS OF INVENTION

According to the present invention, it is possible to provide an adhesive body in which a reduction in adhesive force after the adhesive body is stored and transported is prevented even in a configuration in which a release liner is not provided.

### BRIEF DESCRIPTION OF DRAWINGS

[Fig. 1] Fig. 1 is a schematic cross-sectional view of one configuration example of a wound body of an adhesive body.
[Fig. 2] Fig. 2 is a schematic cross-sectional view of one configuration example of the adhesive body.
[Fig. 3] Fig. 3 is a schematic cross-sectional view of one configuration example of the adhesive body.
[Fig. 4] Fig. 4 is a schematic view of one configuration example of the wound body of the adhesive body.

### DESCRIPTION OF EMBODIMENTS

Hereinafter, embodiments of the adhesive body according to the present invention will be described in detail.

The present invention is not limited to the embodiments to be described below. In addition, in the present description, the expression "to" is used as an expression including numerical values or physical property values before and after it.

Further, in the present description, the term "weight" has the same meaning as the term "mass", the term "weight%" has the same meaning as the term "mass%", and the term "part by weight" has the same meaning as the term "part by mass".

In the present description, the adhesive body wound into a cylindrical shape, if necessary using a cylindrical body such as a bobbin, is referred to as a wound body. The wound body may or may not include the cylindrical body such as a bobbin.

### [Adhesive Body]

The adhesive body includes an adhesive, in which an adhesive composition forming the adhesive contains a base polymer and a tackifying resin having a weight average molecular weight of 1,500 or less.

In the adhesive body according to the embodiment of the present invention, since the weight average molecular weight (Mw) of the tackifying resin contained in the adhesive composition is set to 1,500 or less (preferably 1,000 or less), compatibility between the tackifying resin and the base polymer is excellent, and the tackifying resin is uniformly dispersed in the adhesive, so that a reduction in adhesive force after storage and transportation can be prevented.

In addition, in the adhesive body according to the embodiment of the present invention, even in a case where surfaces of adhesives are in contact with each other, the adhesives which are in contact with each other can be peeled off at an interface after adhering to each other, and thus a release liner is not required.

The adhesive body may be in a form of being wound into a roll or in a form in which a plurality of adhesive bodies are laminated. Further, the adhesive body may be an adhesive body in which adhesive bodies processed into various shapes are laminated.

The adhesive body according to the embodiment of the present invention may have a sheet shape or a linear shape. The adhesive body may further include a substrate, and may be an adhesive body including no substrate and constituted only of an adhesive.

When the adhesive body has a sheet shape, the adhesive body may further include a substrate, and in this case, an adhesive is provided on one surface or both surfaces of the substrate having a sheet shape. The conception of "sheet" referred to herein may include those called tape, label, film, and the like.

### The adhesive may form a layer (adhesive layer).

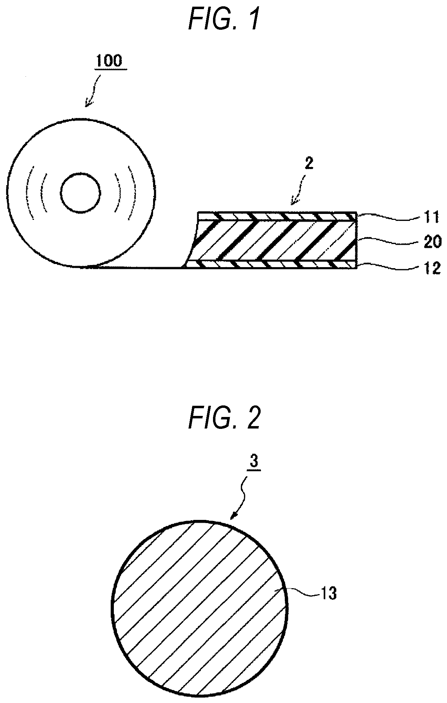

Fig. 1 shows a configuration example of an adhesive body according to an embodiment of the present invention. The adhesive body may be in a form obtained by spirally winding a sheet-shaped adhesive body 2 around a winding core or may be in a form obtained by winding the sheet-shaped adhesive body 2 without a winding core, as a wound body 100 shown in Fig. 1. The adhesive body 2 may be, for example, a double-faced adhesive sheet having a cross-sectional structure shown in Fig. 1. The adhesive body 2 is configured of a substrate 20 and of a first adhesive layer 11 and a second adhesive layer 12 which are disposed respectively on first and second surfaces of the substrate 20. In the wound body 100 of the adhesive body in such a form, a surface of the second adhesive layer 12 is in contact with a surface of the first adhesive layer 11.

In a case where the adhesive body has a linear shape, this adhesive body may be a support-less (core material-less) adhesive body constituted of a linear adhesive layer or may further include a core material.

Fig. 2 is a schematic cross-sectional view of one configuration example of an adhesive body 3 according to the embodiment of the present invention, taken along a direction perpendicular to the longitudinal direction of the adhesive body 3. The adhesive body 3 in this configuration example is a support-less adhesive body constituted of a linear adhesive layer 13. The term "linear" referred to herein means a conception including not only a shape of a straight line, a curved line, an angular line, or the like but also a state of being bendable in various directions at various angles, like a thread (hereinafter, referred to also as "threadlike"). The adhesive layer in the present description also includes a linear adhesive body.

The adhesive body according to the embodiment of the present invention may be a threadlike adhesive body.

Here, the term "threadlike" refers to a shape in which a length in the longitudinal direction is sufficiently long with respect to a length in a width direction, a ratio (long axis/short axis) of a length of the long axis with respect to a length of the short axis in a cross-sectional shape is, for example, 200 or less, and the shape is in a state of being bendable in various directions at various angles, like a yarn.

Since the threadlike adhesive body is bendable in various directions at various angles, the threadlike adhesive body can be bent in accordance with a shape of a bonding region, and can respond to diversification of the shape of the bonding region.

The cross-sectional shape of the adhesive body in this configuration example is a circular shape, but the present embodiment is not limited thereto, and the cross-sectional shape thereof may be an elliptical shape, a rectangular shape such as a quadrangular shape, or the like, in addition to the circular shape.

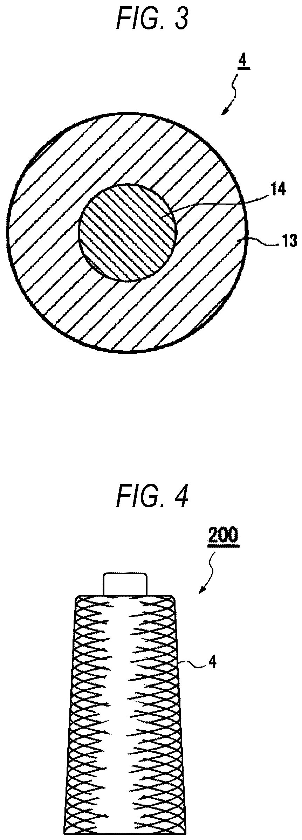

Fig. 3 is a schematic cross-sectional view of one configuration example of the adhesive body according to the embodiment of the present invention, taken along a direction perpendicular to the longitudinal direction of the adhesive body. An adhesive body 4 shown in Fig. 3 includes a linear core material 14 and an adhesive layer 13 which covers a surface of the core material 14 in the longitudinal direction.

A cross-sectional shape of the adhesive body 4 of this configuration example is a circular shape, but the present embodiment is not limited thereto, and the cross-sectional shape thereof may be an elliptical shape, a rectangular shape such as a quadrangular shape, or the like, in addition to the circular shape.

Fig. 4 shows another configuration example of the adhesive body according to the embodiment of the present invention. As shown in Fig. 4, the adhesive body may be a wound body 200 in which the adhesive body 4 is wound around a winding core.

A material of the winding core is not particularly limited, and for example, paper, plastic, or the like can be used.

In addition, a size of the winding core is not particularly limited. An outer diameter of the winding core may be, for example, 4 cm or more and 20 cm or less. An inner diameter of the winding core may be, for example, 3 cm or more and 19 cm or less. A width of the winding core may be, for example, 1 cm or more and 100 cm or less.

As described above, the adhesive body according to the embodiment of the present invention may further include a core material, and the adhesive may cover a surface of the core material in the longitudinal direction.

The adhesive body according to the embodiment of the present invention preferably contains the adhesive as an outermost layer.

In a case where the adhesive body according to the embodiment of the present invention further contains the core material, the adhesive preferably covers the entire circumference of the surface of the core material in the longitudinal direction. An entire circumference of the surface of the core material refers to an entire circumferential surface of the core material, and refers to an entire circumference of 360° of the surface of the core material around a center line in the longitudinal direction of the core material.

By covering the entire circumference of the surface of the core material in the longitudinal direction with the adhesive, an adhesive body having excellent strength can be obtained. The reason is presumed to be that the core material does not appear on the surface, and thus stress is prevented from concentrating on a part of the core material and causing breakage.

A coverage (area (%) of adhesive per unit area of surface of core material) of the core material with the adhesive is preferably 50 area% or more, more preferably 80 area% or more, further preferably 90 area% or more, and particularly preferably 95 area% or more. When the coverage of the core material is 50 area% or more, breakage of the core material can be prevented, and an adhesive body having excellent strength can be obtained.

The adhesive may be impregnated into the core material. The expression "the adhesive is impregnated into the core material" means that the adhesive is present to penetrate among a plurality of filaments in the core material. When the adhesive is impregnated into the core material, adhesion between the adhesive and the core material is maintained and both are less likely to be peeled off, and the strength of the adhesive body is improved.

Hereinafter, the adhesive constituting the adhesive body will be described.

### <Adhesive>

The adhesive body according to the embodiment of the present invention includes an adhesive. An adhesive composition forming the adhesive contains a base polymer and a tackifying resin having a weight average molecular weight of 1,500 or less.

That is, in the embodiment of the present invention, the adhesive can be formed from the adhesive composition.

A type of the adhesive is not particularly limited as long as the adhesive composition forming the adhesive contains the base polymer and the tackifying resin having a weight average molecular weight of 1,500 or less, and examples thereof include an acrylic adhesive, a rubber-based adhesive, a vinyl alkyl ether-based adhesive, a silicone-based adhesive, a polyester-based adhesive, a polyamide-based adhesive, a urethane-based adhesive, a fluorine-based adhesive, and an epoxy-based adhesive.

Among these, the acrylic adhesive, the urethane-based adhesive, the silicone-based adhesive, the rubber-based adhesive, and the polyester-based adhesive are preferable from the viewpoint of adhesiveness, and the acrylic adhesive is particularly preferable from the viewpoint of easy control of the adhesiveness. One kind of the adhesive may be used alone, or two or more kinds thereof may be used in combination. In addition, it is preferable that the adhesive according to the embodiment of the present invention is a pressure-sensitive adhesive which has adhesiveness at room temperature and can attach an adherend to a surface of the adhesive by a pressure generated when the surface of the adhesive and a surface of the adherend are brought into contact. When a pressure-sensitive adhesive is used, heating is not required, and the adhesive is also applicable to an adherend that is sensitive to heat.

Here, the term "acrylic adhesive" refers to an adhesive containing an acrylic polymer as a base polymer (main component among polymeric components, that is, component that accounts for at least 50 weight% thereof). The term "acrylic polymer" refers to a polymer containing a monomer having at least one (meth)acryloyl group in one molecule (hereinafter, this may be referred to as "acrylic monomer") as a main constituent monomer component (main component of monomer, that is, component that accounts for more than 50 weight% of total amount of monomers constituting acrylic polymer). In addition, the term "(meth)acryloyl" in the present description inclusively refers to acryloyl and methacryloyl. Similarly, the term "(meth)acrylic acid ester" comprehensively refers to acrylic ester and methacrylic ester, and the term "(meth)acrylic" comprehensively refers to acrylic and methacrylic.

The above acrylic polymer is preferably a product of polymerization of starting-material monomers which include an alkyl (meth) acrylate as a main monomer and can further include minor monomers copolymerizable with the main monomer. Here, the term "main monomer" refers to a component of the above starting-material monomers which accounts for more than 50 mass% of a monomer composition.

As the alkyl (meth) acrylate, for example, a compound represented by the following formula (1) can be suitably used.

Examples thereof include compounds represented by CH₂ = C(R¹)COOR² (1)
(in the formula, R¹ represents a hydrogen atom or a methyl group, and R² represents an alkyl group having 2 to 14 carbon atoms).

Examples of R² include an ethyl group, a propyl group, an isopropyl group, a butyl group, an isobutyl group, an isoamyl group, a hexyl group, a heptyl group, a 2-ethylhexyl group, an isooctyl group, an isononyl group, and an isodecyl group. Among these, preferred examples of R² are alkyl groups having 2 to 10 carbon atoms such as the butyl group and the 2-ethylhexyl group. The above (meth)acrylic acid alkyl ester can be used alone or in combination of two or more kinds thereof.

In a monomer mixture containing the (meth)acrylic acid alkyl ester as a main component, a ratio of the (meth)acrylic acid alkyl ester [for example, the above (meth)acrylic acid C₂₋₁₄ alkyl ester] is generally 80 weight% or more (for example, about 80 weight% to 99.8 weight%), preferably 85 weight% or more (for example, about 85 weight% to 99.5 weight%), and further preferably 90 weight% or more (for example, about 90 weight% to 99 weight%).

The monomer mixture generally contains a functional group-containing monomer (thermally crosslinkable functional group-containing monomer) in order to introduce crosslinking points for thermal crosslinking. By using the functional group-containing monomer as a comonomer component, the adhesive force to the adherend is also improved.

Examples of the functional group-containing monomer include: carboxyl group-containing monomers or acid anhydrides thereof, such as acrylic acid, methacrylic acid, itaconic acid, maleic acid, crotonic acid, and maleic anhydride; hydroxyl group-containing monomers, such as 2-hydroxyethyl (meth)acrylate, 2-hydroxypropyl (meth)acrylate, and 2-hydroxybutyl (meth)acrylate; amide group-containing monomers, such as (meth)acrylamide, N,N-dimethyl (meth)acrylamide, N-methylol (meth)acrylamide, N-methoxymethyl (meth)acrylamide, and N-butoxymethyl (meth)acrylamide; amino group-containing monomers, such as dimethylaminoethyl (meth)acrylate and t-butylaminoethyl (meth)acrylate; glycidyl group-containing monomers, such as glycidyl (meth)acrylate; (meth)acrylonitrile; N-(meth)acryloylmorpholine; and N-vinyl-2-pyrrolidone. Among these, the carboxyl group-containing monomers such as acrylic acid or acid anhydrides thereof are preferable. The above functional group-containing monomers may be used alone or in combination of two or more kinds thereof.

An amount of the functional group-containing monomer used is, for example, about 0.5 parts by weight to 12 parts by weight, and preferably about 1 part by weight to 8 parts by weight, with respect to 100 parts by weight of the (meth)acrylic acid alkyl ester.

The monomer mixture may contain other copolymerizable monomers as necessary in order to improve properties such as cohesive force. Examples of such copolymerizable monomers include: vinyl esters such as methyl (meth)acrylate: vinyl acetate; aromatic vinyl compounds such as styrene and vinyl toluene; (meth)acrylic acid esters of cyclic alcohols such as cyclopentyl di(meth)acrylate and isobornyl (meth)acrylate; and (meth)acrylic acid esters of polyhydric alcohols such as neopentyl glycol di(meth)acrylate, hexanediol di(meth)acrylate, propylene glycol di(meth)acrylate, trimethylolpropane tri(meth)acrylate, tetramethylolmethane tri(meth)acrylate, and dipentaerythritol hexa(meth)acrylate. These copolymerizable monomers can also be used alone or in combination of two or more kinds thereof.

It is preferable to blend a crosslinking agent into these acrylic adhesives. As the crosslinking agent used for the acrylic adhesives, a commonly used crosslinking agent can be used, and examples thereof include silane-based crosslinking agents, organic peroxides, epoxy-based compounds, amino group-containing compounds, organic metal salts, metal alcoholates, metal chelates, hydrazide-based crosslinking agents, carbodiimide-based crosslinking agents, isocyanate-based crosslinking agents, and silanol-based crosslinking agents. Among these, the organic metal salts, the metal chelates, the hydrazide-based crosslinking agents, and the silane-based crosslinking agents are preferable since crosslinking is rapidly completed after the adhesive composition is dried. In a case of a water-dispersible adhesive, the hydrazide-based crosslinking agents and the silane-based crosslinking agents are particularly more preferable. The crosslinking agent may be either oil-soluble or water-soluble, and may be used alone or in combination of two or more kinds thereof.

As the silane-based crosslinking agent, it is preferable to use a silane-based monomer copolymerizable with the above (meth)acrylic acid alkyl ester. The silane-based monomer is not particularly limited as long as it is a polymerizable compound having a silicon atom, and a silane compound having a (meth)acryloyl group, such as a (meth)acryloyloxyalkylsilane derivative, is preferable because of excellent copolymerizability with the above alkyl (meth)acrylic acid alkyl ester. Examples of the silane-based monomer include γ-methacryloxypropyltrimethoxysilane, 3-acryloyloxypropyltrimethoxysilane, 3-methacryloyloxypropyltriethoxysilane, 3-acryloyloxypropyltriethoxysilane, 3-methacryloyloxypropylmethyldimethoxysilane, 3-acryloyloxypropylmethyldimethoxysilane, 3-methacryloyloxypropylmethyldiethoxysilane, and 3-acryloyloxypropylmethyldiethoxysilane. These silane-based monomers can be used alone or in combination of two or more kinds thereof.

In addition to the above, as the copolymerizable silane-based monomer, for example, vinyltrimethoxysilane, vinyltriethoxysilane, 4-vinylbutyltrimethoxysilane, 4-vinylbutyltriethoxysilane, 8-vinyloctyltrimethoxysilane, 8-vinyloctyltriethoxysilane, 10-methacryloyloxydecyltrimethoxysilane, 10-acryloyloxydecyltrimethoxysilane, 10-methacryloyloxydecyltriethoxysilane, and 10-acryloyloxydecyltriethoxysilane can be used.

An amount of the crosslinking agent used can be suitably selected in accordance with a type of the starting-material monomer and application of an adhesive article. In the present embodiment, the amount of the crosslinking agent with respect to 100 parts by weight of the starting-material monomer (excluding crosslinking agent) is preferably in a range of 0.005 parts by weight to 5 parts by weight, and further preferably 0.01 parts by weight to 3 parts by weight.

In the present embodiment, other crosslinking agents may also be used, and crosslinking using the other crosslinking agents, UV crosslinking, radiation crosslinking such as electron beam crosslinking, and the like can be applied. As the other crosslinking agent, a commonly used crosslinking agent can be used, and examples thereof include organic peroxides, epoxy-based compounds, amino group-containing compounds, organic metal salts, metal alcoholates, metal chelates, hydrazide-based crosslinking agents, carbodiimide-based crosslinking agents, isocyanate-based crosslinking agents, and silane or silanol crosslinking agents. The other crosslinking agent may be either oil-soluble or water-soluble.

Any type of a solvent-based adhesive and a water-dispersible adhesive can be used as the adhesive composition. A water-dispersible adhesive composition is preferable from the viewpoint of enabling high-speed coating, being environmentally friendly, and having a small influence (swelling, dissolving) on a core material caused by a solvent.

The water-dispersible adhesive composition can be prepared, for example, by subjecting a monomer mixture containing the above (meth)acrylic acid alkyl ester as a main component and a silane-based monomer to common emulsion polymerization to obtain an aqueous dispersion of a (meth)acrylic acid ester copolymer, and adding thereto, as necessary, the above other crosslinking agent.

In the case of using the above water-dispersible adhesive composition containing the (meth)acrylic acid alkyl ester as a main component and a silane-based monomer, the reason why an excellent effect is achieved is not necessarily clear, but an intramolecular chain bonding crosslinking points in polymer molecules are long, making polymer chains less likely to unravel. In addition, since there is no water present after drying, hydrolysis does not occur, and even when adhesives of the adhesive body come into contact with each other, a condensation reaction or a crosslinking reaction does not proceed, and therefore, reactions between the adhesives are less likely to occur and self-adhesion is less likely to occur. Therefore, it is presumed that even when the adhesive body is wound into a roll without a release liner, or a plurality of the adhesive bodies are laminated and the adhesives come into contact with each other, peeling will be easy at an interface of the adhesives.

As a polymerization method, general batch polymerization, continuous dropwise polymerization, divided dropwise polymerization, and the like can be adopted, and a polymerization temperature is, for example, about 20°C to 100°C.

Examples of a polymerization initiator used in the polymerization include, but are not limited to, azo-based initiators such as 2,2'-azobis[N-(2-carboxyethyl)-2-methylpropionamidine] n-hydrate, 2,2'-azobisisobutyronitrile, 2,2'-azobis(2-methylpropionamidine) disulfate, 2,2'-azobis(2-amidinopropane) dihydrochloride, 2,2'-azobis[2-(5-methyl-2-imidazolin-2-yl) propane] dihydrochloride, and 2,2'-azobis(N,N'-dimethylene); persulfates such as potassium persulfate and ammonium persulfate; peroxide-based initiators such as benzoyl peroxide, t-butyl hydroperoxide, and hydrogen peroxide; substituted ethane-based initiators such as phenyl-substituted ethane; aromatic carbonyl compounds; and redox-based initiators such as a combination of persulfate and sodium hydrogen sulfite and a combination of peroxide and sodium ascorbate. An amount of the polymerization initiator used is, for example, about 0.005 parts by weight to 1 part by weight with respect to 100 parts by weight of the total amount of the monomers.

A chain transfer agent may be used in the polymerization. Examples of the chain transfer agent include common chain transfer agents, such as mercaptans such as lauryl mercaptan and dodecanethiol. An amount of the chain transfer agent used is, for example, about 0.001 parts by weight to 0.5 parts by weight with respect to the total amount of 100 parts by weight of the monomers.

As an emulsifier, anionic emulsifiers such as sodium lauryl sulfate, sodium polyoxyethylene lauryl sulfate, ammonium lauryl sulfate, sodium dodecylbenzenesulfonate, polyoxyethylene alkyl ether sodium sulfate, polyoxyethylene alkyl phenyl ether ammonium sulfate, and polyoxyethylene alkyl phenyl ether sodium sulfate; and nonionic emulsifiers such as polyoxyethylene alkyl ether and polyoxyethylene alkyl phenyl ether can be used. These emulsifiers may be used alone or in combination of two or more kinds thereof. An amount of the emulsifier used is, for example, about 0.2 parts by weight to 10 parts by weight, and preferably about 0.5 parts by weight to 5 parts by weight with respect to the total amount of 100 parts by weight of the monomers.

In addition to the above, the adhesive composition may also be prepared by, after the (meth)acrylic acid ester copolymer is obtained by a method other than emulsion polymerization, adding the crosslinking agent as necessary, and dispersing the obtained mixture in water with the emulsifier.

The adhesive composition may further contain, as necessary, a base (such as aqueous ammonia) or an acid for adjusting a pH thereof, and an additive generally used in an adhesive, such as a thickener, a surfactant, an anti-aging agent, a filler, a pigment, and a colorant.

The adhesive may suitably contain various additives such as a crosslinking agent, a viscosity modifier (such as thickener), a leveling agent, a release modifier, a plasticizer, a softener, a filler, a colorant (pigment, dye, and the like), a surfactant, an antistatic agent, a preservative, an anti-aging agent, an ultraviolet absorber, an antioxidant, and a light stabilizer.

Examples of the thickener include polyacrylic acid-based thickeners, urethane-based thickeners, and polyvinyl alcohol-based thickeners. Among these, the polyacrylic acid-based thickeners and the urethane-based thickeners are preferable. A content of the thickener is preferably 10 parts by weight or less, and more preferably 5 parts by weight or less, with respect to 100 parts by weight of the base polymer.

The adhesive composition (which may be an adhesive) according to the embodiment of the present invention contains the tackifying resin having a weight average molecular weight of 1,500 or less.

The above tackifying resin is not particularly limited as long as it has a weight average molecular weight of 1,500 or less, and any appropriate tackifying resin is used.

The weight average molecular weight of the tackifying resin is preferably 1,000 or less, more preferably 100 to 1,000, further preferably 300 to 990, and particularly preferably 500 to 980.

By using the tackifying resin having a weight average molecular weight of 1,500 or less, the base polymer and the tackifying resin are more easily compatible, and segregation of the tackifying resin in a surface layer of the adhesive is prevented, and thus a reduction in adhesive force of the adhesive after storage is prevented even in a case where the adhesive is stored without being protected with a release liner.

In addition, even when the tackifying resin having a weight average molecular weight of 1,500 or less (preferably 1,000 or less) is segregated in the surface layer of the adhesive depending on a storage condition, the tackifying resin can maintain a compatible state to maintain the adhesiveness.

A tackifying resin having a weight average molecular weight of more than 1,500 is incompatible and cannot maintain the adhesiveness.

Specific examples of the tackifying resin include: rosin-based tackifying resins (for example, unmodified rosin, modified rosin, rosin phenolic resin, rosin ester resin, and the like); terpene-based tackifying resins (for example, terpene-based resin, terpene phenolic resin, styrene modified terpene resin, aromatic modified terpene resin, hydrogenated terpene resin); hydrocarbon-based tackifying resins (for example, aliphatic hydrocarbon resin, aliphatic cyclic hydrocarbon resin, aromatic hydrocarbon resin (for example, styrene-based resin, xylene-based resin, and the like), aliphatic/aromatic petroleum resin, aliphatic/cycloaliphatic petroleum resin, hydrogenated hydrocarbon resin, coumarone-based resin, coumarone indene resin, and the like); phenol-based tackifying resins (for example, alkyl phenol resin, xylene formaldehyde resin, resol, novolak, and the like); ketone-based tackifying resins; polyamide-based tackifying resins; epoxy-based tackifying resins; elastomer-based tackifying resins; and the like. Among these, the rosin-based tackifying resins, the terpene-based tackifying resins, or the hydrocarbon-based tackifying resins (styrene-based resin and the like) are preferable. The tackifying resin may be used alone or in combination of two or more kinds thereof.

A content of the tackifying resin in the above adhesive composition is preferably 1 part by mass or more, more preferably 5 parts by mass or more, further preferably 10 parts by mass or more, still more preferably 20 parts by mass or more, and particularly preferably 30 parts by mass or more with respect to 100 parts by mass of the base polymer from the viewpoint of improving the adhesive force. From the viewpoint of preventing a reduction in adhesive force of the adhesive, the content is preferably 100 parts by mass or less, and more preferably 90 parts by mass or less.

The adhesive composition contains the base polymer and the tackifying resin, and contains, with respect to 100 parts by mass of the base polymer, preferably 1 part by mass to 100 parts by mass, more preferably 5 parts by mass to 100 parts by mass, further preferably 10 parts by mass to 100 parts by mass, still more preferably 10 parts by mass to 90 parts by mass, particularly preferably 20 parts by mass to 90 parts by mass, and most preferably 30 parts by mass to 90 parts by mass of the tackifying resin.

A method for forming the adhesive body is not particularly limited, and for example, in order to form the adhesive layer, the following methods can be adopted: a method (direct method) in which the adhesive composition is directly applied to a releasing or non-releasing substrate and then dried or cured; and a method (transfer method) in which the adhesive composition is applied to a surface having release properties and then dried or cured to thereby form an adhesive layer on the surface and this adhesive layer is thereafter bonded and transferred to a substrate.

In a case where the adhesive body has a sheet shape, the sheet-shaped adhesive body (adhesive sheet) can be obtained, for example, by applying the above adhesive composition to a substrate and thermally crosslinking the applied adhesive composition to form an adhesive layer. It is also possible to obtain an adhesive sheet having no substrate by once forming the above adhesive layer on a release liner and removing the release liner.

The adhesive sheet may be an adhesive tape, and from the viewpoint of strength and handleability, a width of the adhesive tape is preferably 0.01 mm or more, and more preferably 0.02 mm or more. In addition, since an adhesive body applicable to adherends having various surface shapes or regions can be obtained, the width of the adhesive tape is preferably 40 mm or less, and more preferably 20 mm or less.

In a case of a sheet-shaped adhesive body (adhesive layer) having no substrate, a thickness thereof is not particularly limited. However, since too small a thickness may result in poor handleability, the thickness thereof is, for example, preferably 1 µm or more, and more preferably 5 µm or more. In addition, since too large a thickness may result in poor flexibility, the thickness thereof is, for example, preferably 100 µm or less, and more preferably 50 µm or less.

In a case of a sheet-shaped adhesive body having a substrate, the substrate preferably satisfying that an adhesive force between the adhesive layer and the substrate is higher than a self-adhesive force of the adhesive layers, from the viewpoint of maintaining the shape of the adhesive body. For example, plastic films such as polypropylene films, ethylene-propylene copolymer films, polyester films, and polyvinyl chloride, paper such as kraft paper, metal foils, and the like can be used. The plastic films may be either an unstretched film or a stretched (uniaxially or biaxially stretched) film. A surface of the substrate to which the adhesive composition is to be applied may have undergone a surface treatment with a generally used primer, a corona discharge system, and the like. A thickness of the substrate can be suitably selected in accordance with purposes, and is generally about 10 µm to 500 µm.

In this case, a thickness of the adhesive layer is not particularly limited and can be suitably selected in accordance with purposes. Generally, the thickness of the adhesive layer is suitably about 1 µm to 200 µm, and is preferably about 3 µm to 150 µm.

The adhesive composition can be applied using a common coater such as, for example, a gravure roll coater, a reverse-roll coater, a kiss-roll coater, a dip-roll coater, a bar coater, a knife coater, and a spray coater. The adhesive composition is applied such that a thickness of the adhesive layer after drying is, for example, about 10 µm to 100 µm. A drying temperature can be suitably adopted, and is preferably 40°C to 200°C, further preferably 50°C to 180°C, and particularly preferably 70°C to 120°C. As a drying time, an appropriate time can be adopted as needed. The above drying time is preferably 5 seconds to 20 minutes, further preferably 5 seconds to 10 minutes, and particularly preferably 10 seconds to 5 minutes.

The thermal crosslinking is conducted by a common method, for example, by performing heating to reach a temperature at which a crosslinking reaction proceeds, in accordance with a type of the crosslinking agent. A solvent-insoluble content of the adhesive after crosslinking is, for example, about 5 weight% to 70 weight%. In addition, solvent-soluble components of the adhesive after crosslinking have a molecular weight (weight average molecular weight; in terms of standard polystyrene) of, for example, about 100,000 to 600,000, and preferably about 200,000 to 450,000. Molecular weights of the solvent insolubles and the solvent-soluble components of the adhesive after crosslinking can be set at any desired values, for example, by suitably regulating a proportion of the crosslinking agent or the functional group-containing monomer to a total amount of the monomers and a type and an amount of the chain transfer agent, in particular, amounts of the crosslinking agent and the chain transfer agent.

In the case where the adhesive body has a linear shape, this linear adhesive body can be obtained, for example, by the following method.

A method for forming the linear adhesive body according to the present embodiment is not particularly limited, and examples thereof include a method in which an adhesive composition constituting an adhesive body is prepared, the adhesive composition is linearly applied onto a release liner using a dispenser to once form an adhesive body, and the release liner is removed. In a case where the adhesive body is an adhesive body containing a core material and an adhesive, the adhesive can be formed on a surface of the core material by applying the adhesive composition on the surface of the core material by dipping, immersion, coating, or the like, followed by drying by heating. The adhesive composition can be applied using a common coater such as, for example, a gravure roll coater, a reverse-roll coater, a kiss-roll coater, a dip-roll coater, a bar coater, a knife coater, and a spray coater. A drying temperature can be suitably adopted, and is preferably 40°C to 200°C, further preferably 50°C to 180°C, and particularly preferably 70°C to 120°C. As a drying time, an appropriate time can be adopted as needed. The above drying time is preferably 5 seconds to 20 minutes, further preferably 5 seconds to 10 minutes, and particularly preferably 10 seconds to 5 minutes.

In a case of a linear adhesive body containing no core material and having a circular cross-sectional shape, a diameter of a cross section of the adhesive body is not particularly limited. However, since too small a diameter may result in that the linear adhesive body is easily cut, the diameter thereof is, for example, preferably 20 µm or more, and more preferably 50 µm or more. In addition, since too large a diameter may result in poor flexibility, the diameter thereof is, for example, preferably 1,000 µm or less, and more preferably 500 µm or less.

In a case of a linear adhesive body containing a core material, the adhesive may cover the whole surface (surface in longitudinal direction) of the core material or may cover only some of the surface of the core material. An adhesive is typically formed to be continuous, but the adhesive is not limited to such a form, and may be formed in a regular pattern such as a dot pattern or a stripe pattern, or a random pattern. An end surface of the core material may or may not be covered with the adhesive. For example, in a case where the adhesive article is cut during production or during use, the end surface of the core material may not be covered with the adhesive.

The core material to be used in the adhesive body is not particularly limited, and for example, a resin, a rubber, foam, an inorganic fiber, and a composite thereof can be used. It is preferably that the adhesive force between the adhesive layer and the core material is higher than a self-adhesive force of the adhesive layers, from the viewpoint of maintaining the shape of the adhesive body. Examples of the resin include a polyolefin such as polyethylene (PE), polypropylene (PP), an ethylene-propylene copolymer, and an ethylene-vinyl acetate copolymer; a polyester such as polyethylene terephthalate (PET); a vinyl chloride resin; a vinyl acetate resin; a polyimide resin; a polyamide resin; and a fluorine-based resin. Examples of the rubber include a natural rubber, and a synthetic rubber such as a urethane rubber. Examples of the foam include a foamed polyurethane and a foamed polychloroprene rubber. Examples of the fiber include a glass fiber, a carbon fiber, and a metal fiber. A cross-sectional shape of the core material is not particularly limited, and is generally a cross-sectional shape corresponding to a cross-sectional shape of the adhesive article.

A material of a threadlike core material usable in a threadlike adhesive body is not particularly limited, and may be a chemical fiber or a natural fiber. Examples of the chemical fiber include: various polymer materials such as rayon, cupra, acetate, promix, nylon, aramid, vinylon, vinylidene, polyvinyl chloride, polyester, acryl, polyethylene, polypropylene, polyurethane, polychlal, and polylactic acid; glasses; carbon fibers; synthetic rubbers such as polyurethane; and metals. Examples of the natural fiber include silk, natural rubber, cotton, and wool. Among these, the polyester is preferable as the material of the core material, and the polyethylene terephthalate (PET) is more preferable because physical properties such as a diameter and a tensile strength can be easily controlled.

As a form of the threadlike core material, for example, in addition to monofilaments, multifilaments, span yarns, finished yarns generally referred to as textured yarn, bulky yarn, and stretched yarn that are subjected to crimping or bulking, or combined yarns obtained by, for example, twisting those can be used. The cross-sectional shape thereof is not limited to a circular shape, and can be a quadrilateral shape, a short shape such as a star shape, an elliptic shape, a hollow shape, and the like.

It is preferable that the core material is a multifilament yarn containing a plurality of filaments and formed by making the plurality of filaments into a composite yarn or a twisted yarn. When the core material is a multifilament yarn, sufficient strength and stable physical properties can be obtained.

From the viewpoint of adhesive force, the number of filaments contained in the core material is preferably 4 or more, more preferably 10 or more, and particularly preferably 20 or more.

The core material may contain various additives such as a filler (inorganic filler, organic filler, and the like), an anti-aging agent, an antioxidant, an ultraviolet absorber, an antistatic agent, a lubricant, a plasticizer, and a colorant (pigment, dye, and the like) as necessary. A known or common surface treatment such as a corona discharge treatment, a plasma treatment, or application of an undercoat agent may be performed on a surface of the core material.

A size of the cross section of the core material is not particularly limited and can be suitably selected in accordance with purposes. For example, in the case where the cross-sectional shape is a circular shape, a diameter thereof is preferably 1 µm to 2,000 µm, and more preferably 10 µm to 1,000 µm from the viewpoint of handleability (difficulty in cutting).

In a case of the adhesive body containing a core material, the thickness of the adhesive layer is not particularly limited, and is, for example, preferably 1 µm or more, and more preferably 3 µm or more from the viewpoint of adhesiveness. In addition, the thickness of the adhesive layer is, for example, preferably 200 µm or less, and more preferably 150 µm or less from the viewpoint of drying properties.

In the case of the adhesive body containing a core material, the diameter of the adhesive body is not particularly limited, and is, for example, in the case where the cross-sectional shape is a circular shape, preferably 50 µm to 1,000 µm, more preferably 100 µm to 800 µm, and further preferably 200 µm to 600 µm from the viewpoint of processability.

When the adhesive body according to the embodiment of the present invention has a linear shape, the adhesive body can be attached even to a narrow member or a narrow region while being prevented from protruding and can be easily disassembled (reworked), which is preferable. Hereinafter, the adhesive body having a linear shape is also referred to as a linear adhesive body. For example, the linear adhesive body according to the embodiment of the present invention can be suitably used for fixing an article during production of an electronic device and fixing a vehicle-mounted member, and can be applied to fixing of a narrow frame of a mobile terminal such as a mobile phone or a smartphone, and fixing of batteries, motors, and the like.

In addition, when the adhesive body according to the embodiment of the present invention has a linear shape, the adhesive body can be pushed into a narrow gap to adhere to a surface of the gap or fill the gap.

Further, the adhesive body according to the embodiment of the present invention preferably has flexibility, and is particularly preferably threadlike to be bendable in various directions at various angles, like a yarn. The adhesive body having flexibility, in particular, the adhesive body that is threadlike has an advantage in that the adhesive body can be easily applied to complicated shapes such as a curved line, a curved surface, and an uneven shape in addition to the effects described above. Hereinafter, the adhesive body that is threadlike is also referred to as a threadlike adhesive body. The adhesive body according to the embodiment of the present invention is preferably a threadlike adhesive body.

For example, when an adhesive tape is to be attached to an adherend having a part with a complicated shape such as a curved line, a curved surface, and an uneven shape, a wrinkle or overlapping may occur in the adhesive tape in such a part, and it is difficult to finely attach the adhesive tape while preventing a protrusion, and the part where a wrinkle or overlapping occurs may cause a reduction in adhesive force. In order to attach the adhesive tape while preventing the occurrence of a wrinkle or overlapping, it is conceivable to attach the adhesive tape after finely cutting the adhesive tape, but workability will be significantly reduced. On the other hand, the adhesive body having flexibility, in particular, the threadlike adhesive body can be firmly attached without causing a wrinkle or overlapping even when being attached to the part with a complicated shape such as a curved line, a curved surface, and an uneven shape. Further, since the threadlike adhesive body can be attached to a desired part at one time, that is, in one step, the threadlike adhesive body is also excellent in workability and can be applied to an automation line.

Specifically, examples of an application of the threadlike adhesive body include an application to fix, in a desired form, cables such as electric wires and optical fibers, optical fiber sensors such as an LED fiber light and fiber Bragg gratings (FBG), various wire members (linear members) such as a yarn, a string, and a wire, and a narrow member. For example, even in a case where a wire member or a narrow member is fixed to another member in a complicated shape, the threadlike adhesive body can be firmly fixed with excellent workability while preventing a protrusion, a wrinkle, and overlapping in accordance with the complicated shape that the wire member or the narrow member have. In a case where the wire member or the narrow member is fixed to another member, the threadlike adhesive body is attached in advance in accordance with a form in which the wire member or the narrow member is to be fixed on a surface of the another member, and then, the wire member or the narrow member can be bonded and fixed in accordance with the adhesive body attached to the surface of the another member. Alternatively, the threadlike adhesive body is attached to the wire member or the narrow member, and then, the wire member or the narrow member may be fixed to the another member in a desired form.

The threadlike adhesive body can also be suitably used for temporary fixing (temporary tacking) of an article for temporarily fixing (temporarily tacking) one article to a surface of another article. More specifically, the threadlike adhesive body can be particularly suitably used for application of temporary fixing (temporary tacking) during a production process of, for example, fiber products and leather products such as clothes, shoes, bags, and hats. However, the application is not limited to these examples, and the threadlike adhesive body is suitably used for various applications in which temporary fixing (temporary tacking) is desired.

For example, when one article is fixed to a surface of another article, the one article is temporarily fixed and positioned on the surface of the another article in advance using the threadlike adhesive body, and then both articles are fixed (finally fixed) by a fixing method such as thermocompression bonding and sewing. In this case, the threadlike adhesive body easily and temporarily fixes the two articles without a fixing portion provided between the two articles. For example, in a case where a fiber product or a leather product is to be sewed, when temporary fixing is performed using the threadlike adhesive body, the temporary fixing can be easily performed while avoiding a part to be sewed, and the adhesive can be easily prevented from adhering to a needle.

In addition, the threadlike adhesive body can be well attached while preventing a protrusion, a wrinkle, and overlapping even when shapes of the two articles are complicated shapes such as a curved line, a curved surface, and an uneven shape as described above, and the threadlike adhesive body can be attached in one step and the workability is good.

Even in a case of an easily deformable member, such as fabric, cloth, and leather that forms a fiber product or a leather product, temporary fixing can be performed using the threadlike adhesive body, so that deformation of the member due to tension can be prevented, and design aesthetics after fixing (final fixing) is improved.

Further, in the case of the threadlike adhesive body, after the two articles are fixed (finally fixed), the threadlike adhesive body can be pulled out and removed from between the two articles that are fixed (finally fixed) as necessary. Accordingly, the adhesive can be prevented from squeezing out, and deterioration of design aesthetics due to aging discoloration of the remaining adhesive can be satisfactorily prevented.

Further, the threadlike adhesive body according to the embodiment of the present invention can be used as a dam material for preventing squeezing out of a glue or an adhesive when a glue or an adhesive is applied to an adhesion object (adherend). The dam material can be used, for example, to prevent squeezing out of a sealing resin used for bonding an optical panel. In the case where the threadlike adhesive body is used as a dam material, the threadlike adhesive body may be peeled off or remain after the glue or the adhesive is cured.

In the case of the threadlike adhesive body according to the embodiment of the present invention, the adhesive body can be twisted with a yarn made of other materials to form a composite yarn or can be woven with a yarn or cloth (including nonwoven fabrics and sheets) made of other materials, thereby achieving function combination.

The threadlike adhesive body can be produced by a known method, for example, a method including a coating step of coating a core material with a coating liquid containing an adhesive.

The core material may be coated with the coating liquid by, for example, dipping, immersion, application, or the like, and may be dried by heating as necessary.

The heat drying may be performed, for example, under a condition of 80°C to 120°C, preferably 90°C to 110°C, for example, for 20 seconds to 3 minutes, preferably 30 seconds to 2 minutes.

The coating liquid can be applied by using a common coater such as a gravure roll coater, a reverse-roll coater, a kiss-roll coater, a dip-roll coater, a bar coater, a knife coater, and a spray coater.

A method for producing the threadlike adhesive body may or may not include a fiber opening step. In the fiber opening step, when the core material is coated with the adhesive, the core material is opened by running the core material along a non-rotating roller.

In a case where the method for producing the threadlike adhesive body includes a coating step, it is preferable that a roller is used in the coating step and a rotation speed of the roller is 0.3 times to 5.0 times a feeding speed of the core material.

The rotation speed of the roller is more preferably 0.4 times to 4.0 times, further preferably 0.5 times to 3.0 times, and particularly preferably 0.8 times to 1.5 times the feeding speed of the core material.

In the coating step, it is preferable to apply a tension of 6.0 mN/dtex or less to the core material.

The tension applied to the core material is preferably 0.2 mN/dtex to 6.0 mN/dtex, and more preferably 0.4 mN/dtex to 5.0 mN/dtex.

As described above, the following matters are disclosed in the present description.
[1] An adhesive body including an adhesive, in which an adhesive composition forming the adhesive contains a base polymer and a tackifying resin having a weight average molecular weight of 1,500 or less.
[2] The adhesive body according to [1], in which the tackifying resin has a weight average molecular weight of 1,000 or less.
[3] The adhesive body according to [1] or [2], further including a core material, in which the adhesive covers a surface of the core material in a longitudinal direction.
[4] The adhesive body according to any of [1] to [3], in which the adhesive body is a threadlike adhesive body.
[5] The adhesive body according to [3], in which the core material is formed of four or more filaments.
[6] The adhesive body according to any of [1] to [5], in which a content of the tackifying resin in the adhesive composition is 5 parts by mass to 100 parts by mass with respect to 100 parts by mass of the base polymer.

### EXAMPLES

The present invention will be described in more detail below with reference to examples, but the present invention is not limited to the following examples in any way.

### <Preparation of Acrylic Polymer Emulsion>

### (Preparation of Acrylic Polymer Emulsion 1)

40 parts by mass of ion-exchanged water was added into a reaction vessel provided with a cooling tube, a nitrogen introduction tube, a thermometer, and a stirrer, and stirred at 60°C for 1 hour or more while introducing nitrogen gas to perform nitrogen substitution. 0.1 parts by mass of 2,2'-azobis[N-(2-carboxyethyl)-2-methylpropionamidine] n-hydrate (polymerization initiator) was added to this reaction vessel. While the reaction solution was maintained at 60°C, a monomer emulsion A described below was gradually added dropwise thereto over 4 hours to allow an emulsion polymerization reaction to proceed.

Examples of the monomer emulsion A include an emulsion obtained by adding 85 parts by mass of 2-ethylhexyl acrylate (2EHA), 13 parts by mass of methyl acrylate (MA), 1.25 parts by mass of acrylic acid (AA), 0.75 parts by mass of methacrylic acid (MAA), 0.05 parts by mass of lauryl mercaptan (chain transfer agent), 0.02 parts by mass of γ-methacryloxypropyltrimethoxysilane (manufactured by Shin-Etsu Chemical Co., Ltd., trade name: "KBM-503"), and 2 parts by mass of sodium polyoxyethylene lauryl sulfate (emulsifier) to 30 parts by mass of ion-exchanged water.

After completion of the dropwise addition of the monomer emulsion A, the reaction solution was further kept at 60°C for 3 hours and cooled to room temperature, and a pH thereof was then adjusted to 7 by addition of 10% ammonia water to obtain an acrylic polymer emulsion 1 (water-dispersible acrylic polymer).

### (Preparation of Acrylic Polymer Emulsion 2)

40 parts by mass of ion-exchanged water was added into a reaction vessel provided with a cooling tube, a nitrogen introduction tube, a thermometer, and a stirrer, and stirred at 60°C for 1 hour or more while introducing nitrogen gas to perform nitrogen substitution. 0.1 parts by mass of 2,2'-azobis[N-(2-carboxyethyl)-2-methylpropionamidine] n-hydrate (polymerization initiator) was added to this reaction vessel. While the reaction solution was maintained at 60°C, a monomer emulsion B described below was gradually added dropwise thereto over 4 hours to allow an emulsion polymerization reaction to proceed.

Examples of the monomer emulsion B include an emulsion obtained by adding 68 parts by mass of butyl acrylate (BA), 29.1 parts by mass of 2-ethylhexyl acrylate, 2.9 parts by mass of acrylic acid, 0.05 parts by mass of lauryl mercaptan (chain transfer agent), 0.03 parts by mass of γ-methacryloxypropyltrimethoxysilane (manufactured by Shin-Etsu Chemical Co., Ltd., trade name: "KBM-503"), and 2 parts by mass of sodium polyoxyethylene lauryl sulfate (emulsifier) to 25 parts by mass of ion-exchanged water.

After completion of the dropwise addition of the monomer emulsion B, the reaction solution was further kept at 60°C for 3 hours and cooled to room temperature, and a pH thereof was then adjusted to 7 by addition of 10% ammonia water to obtain an acrylic polymer emulsion 2 (water-dispersible acrylic polymer).

### (Preparation of Acrylic Polymer Emulsion 3)

40 parts by mass of ion-exchanged water was added into a reaction vessel provided with a cooling tube, a nitrogen introduction tube, a thermometer, and a stirrer, and stirred at 60°C for 1 hour or more while introducing nitrogen gas to perform nitrogen substitution. 0.1 parts by mass of 2,2'-azobis[N-(2-carboxyethyl)-2-methylpropionamidine] n-hydrate (polymerization initiator) was added to this reaction vessel. While the reaction solution was maintained at 60°C, a monomer emulsion C described below was gradually added dropwise thereto over 4 hours to allow an emulsion polymerization reaction to proceed.

Examples of the monomer emulsion C include an emulsion obtained by adding 86.6 parts by mass of butyl acrylate, 9.6 parts by mass of 2-ethylhexyl acrylate, 3.8 parts by mass of acrylic acid, 0.055 parts by mass of lauryl mercaptan (chain transfer agent), 0.07 parts by mass of γ-methacryloxypropyltrimethoxysilane (manufactured by Shin-Etsu Chemical Co., Ltd., trade name: "KBM-503"), and 2 parts by mass of sodium polyoxyethylene lauryl sulfate (emulsifier) to 29 parts by mass of ion-exchanged water.

After completion of the dropwise addition of the monomer emulsion C, the reaction solution was further kept at 60°C for 3 hours and cooled to room temperature, and a pH thereof was then adjusted to 7 by addition of 10% ammonia water to obtain an acrylic polymer emulsion 3 (water-dispersible acrylic polymer).

### <Preparation of Adhesive Liquid (Adhesive Composition)>

### (Preparation of Adhesive Liquid 1)

A tackifying resin emulsion (manufactured by Arakawa Chemical Industries, Ltd., trade name: "Tamanol E200NT") was added such that a tackifying resin was 10 parts by mass per 100 parts by mass of the acrylic polymer contained in the acrylic polymer emulsion 1. Further, ion-exchanged water was added to adjust a solid content concentration thereof to 45 mass%, so as to obtain an adhesive liquid 1.

A weight average molecular weight of the tackifying resin can be measured by gel permeation chromatography (GPC) and determined as a value in terms of standard polystyrene. Specifically, the measurement and determination can be performed under the following conditions using an "HLC-8220GPC" (trade name) (manufactured by TOSOH CORPORATION) as a GPC measurement device. The same applies to Examples described later. [Measurement Conditions of GPC]
Sample concentration: 0.2 weight% (tetrahydrofuran solution)
Sample injection amount: 10 µL
Eluent: tetrahydrofuran (THF)
Flow rate (flow velocity): 0.6 mL/min
Column temperature (measurement temperature): 40°C
Column:
   Sample column: one column of "TSK guard column Super HZ-H" (trade name) + two columns of TSK gel Super HZM-H (trade name)" (manufactured by TOSOH CORPORATION)
   Reference column: one column of "TSK gel Super H-RC" (trade name) (manufactured by TOSOH CORPORATION)
   Detector: differential refractometer (RI)
   Standard sample: polystyrene

### (Preparation of Adhesive Liquids 2 to 4)

Adhesive liquids were prepared in the same manner as the adhesive liquid 1 except that the addition amount of the tackifying resin emulsion was changed to 20 parts by mass, 30 parts by mass, and 35 parts by mass of the tackifying resin with respect to 100 parts by mass of the acrylic polymer, respectively.

### (Preparation of Adhesive Liquid 5)

A tackifying resin emulsion (manufactured by Arakawa Chemical Industries, Ltd., trade name: "Tamanol E200NT") was added such that the tackifying resin was 35 parts by mass per 100 parts by mass of the acrylic polymer contained in the acrylic polymer emulsion 2. Further, ion-exchanged water was added to adjust a solid content concentration thereof to 45 mass%, so as to obtain an adhesive liquid 5.

### (Preparation of Adhesive Liquid 6)

A tackifying resin emulsion (manufactured by Arakawa Chemical Industries, Ltd., trade name: "Tamanol E200NT") was added such that the tackifying resin was 35 parts by mass per 100 parts by mass of the acrylic polymer contained in the acrylic polymer emulsion 3. Further, ion-exchanged water was added to adjust a solid content concentration thereof to 45 mass%, so as to obtain an adhesive liquid 6.

### (Preparation of Adhesive Liquid 7)

A tackifying resin emulsion (manufactured by Arakawa Chemical Industries, Ltd., trade name: "SUPER ESTER NS100H") was added such that the tackifying resin was 10 parts by mass per 100 parts by mass of the acrylic polymer contained in the acrylic polymer emulsion 1. Further, ion-exchanged water was added to adjust a solid content concentration thereof to 45 mass%, so as to obtain an adhesive liquid 7.

### (Preparation of Adhesive Liquid 8)

A tackifying resin emulsion (manufactured by Arakawa Chemical Industries, Ltd., trade name: "SUPER ESTER E865NT") was added such that the tackifying resin was 32 parts by mass per 100 parts by mass of the acrylic polymer contained in the acrylic polymer emulsion 1. Further, ion-exchanged water was added to adjust a solid content concentration thereof to 45 mass%, so as to obtain an adhesive liquid 8.

### <Production of Adhesive Tape>

### (Example 1)

The adhesive liquid 1 was applied to a PET film having a thickness of 25 µm (Lumirror #25) so as to have a thickness of 20 µm when dried, and dried at 100°C for 2 minutes. After drying, a release liner (DIAFOIL MRF #38) was placed thereon to obtain an adhesive tape.

### (Examples 2 to 7 and Comparative Example 1)

Adhesive tapes were produced in the same manner as in Example 1 except that the adhesive tapes were produced using the adhesive liquids 2 to 8 instead of the adhesive liquid 1.

### <Adhesive Force of Adhesive Body>

The adhesive force refers to a 180° peel strength (180° peel off adhesive force) to an acrylonitrile-butadiene-styrene copolymer resin plate (ABS plate).

### (Test for Initial Adhesive Force)

Each of the adhesive tapes of Examples and Comparative Examples was cut to have a width of 10 mm and a length of 70 mm. The release liner was peeled off from the cut adhesive tape and press-bonded to an ABS plate by one reciprocation of a 2 kg roller to prepare a sample.

The sample was allowed to stand in an environment of 23°C and 50% for 30 minutes, and then pulled with a tensile tester ("Shimadzu Autograph AG-100M2" manufactured by Shimadzu Corporation) at a peeling rate of 300 mm/min to measure an initial adhesive force (N/10 mm).

### (Test for Adhesive Force after Storage)

Each of the adhesive tapes of Examples and Comparative Examples was cut to have a width of 10 mm and a length of 70 mm, the release liner was peeled off, and the adhesive tape was left to stand in a thermostatic bath at 60°C for 7 days. After 7 days, the adhesive tape was taken out from the thermostatic bath and allowed to stand in an environment of 23°C and 50% for 1 hour. Thereafter, the adhesive tape was press-bonded to an ABS plate by one reciprocation of a 2 kg roller to prepare a sample. The sample was left to stand in an environment of 23°C and 50% for 30 minutes without being protected with the release liner, and then pulled with a tensile tester ("Shimadzu Autograph AG-100M2" manufactured by Shimadzu Corporation) at a peeling rate of 300 mm/min in the same manner as in the test for initial adhesive force, and the adhesive force (N/10 mm) after storage was measured.

### (Adhesive Force Retention Rate)

Based on the initial adhesive force and the adhesive force after storage obtained above, an adhesive force retention rate was calculated by the following formula (2).

Adhesive force retention rate (%) = adhesive force after storage × 100/initial adhesive force (2)

In the following table, a monomer type and a blending amount (parts by mass) of each monomer constituting the polymer are shown in the column of polymer. The "acrylic liquid" and "acrylic liquid polymer" in the table mean the acrylic polymer emulsion described above.

### [Table 1]

**Table 1**

| | | | Example 1 | Example 2 | Example 3 | Example 4 |
|---|---|---|---|---|---|---|
| Adhesive | Adhesive liquid | | Adhesive liquid 1 | Adhesive liquid 2 | Adhesive liquid 3 | Adhesive liquid 4 |
| | Polymer | Acrylic liquid | Acrylic liquid polymer 1 | Acrylic liquid polymer 1 | Acrylic liquid polymer 1 | Acrylic liquid polymer 1 |
| | | Composition | 2EHA/MA/AA/MAA = 85/13/1.25/0.75 | 2EHA/MA/AA/MAA = 85/13/1.25/0.75 | 2EHA/MA/AA/MAA = 85/13/1.25/0.75 | 2EHA/MA/AA/MAA = 85/13/1.25/0.75 |
| | Tackifying resin | Type | Tamanol E200NT | Tamanol E200NT | Tamanol E200NT | Tamanol E200NT |
| | | Number of parts | 10 | 20 | 30 | 35 |
| | | Molecular weight (Mw) | 870 | 870 | 870 | 870 |
| Adhesive force | Initial adhesive force | [N/10 mm] | 3.9 | 4.1 | 4.9 | 4.8 |
| | Adhesive force after storage | [N/10 mm] | 3.8 | 4 | 4.9 | 4.9 |
| | Adhesive force retention rate | [%] | 97.4 | 97.6 | 100.0 | 102.1 |

**Table 1 (continued)**

| | | | Example 5 | Example 6 | Example 7 | Comparative Example 1 |
|---|---|---|---|---|---|---|
| Adhesive | Adhesive liquid | | Adhesive liquid 5 | Adhesive liquid 6 | Adhesive liquid 7 | Adhesive liquid 8 |
| | Polymer | Acrylic liquid | Acrylic liquid polymer 2 | Acrylic liquid polymer 3 | Acrylic liquid polymer 1 | Acrylic liquid polymer 1 |
| | | Composition | BA/2EHA/AA = 68/29.1/2.9 | BA/2EHA/AA = 86.6/9.6/3.8 | 2EHA/MA/AA/MAA = 85/13/1.25/0.75 | 2EHA/MA/AA/MAA = 85/13/1.22/0.75 |
| | Tackifying resin | Type | Tamanol E200NT | Tamanol E200NT | SUPER ESTER NS100H | SUPER ESTER E865NT |
| | | Number of parts | 35 | 35 | 10 | 32 |
| | | Molecular weight (Mw) | 870 | 870 | 1,300 | 2,630 |
| Adhesive force | Initial adhesive force | [N/10 mm] | 4.8 | 4.4 | 3.7 | 4 |
| | Adhesive force after storage | [N/10 mm] | 4.1 | 4 | 1.8 | 0.22 |
| | Adhesive force retention rate | [%] | 85.4 | 90.9 | 48.6 | 5.5 |

Based on results shown in Table 1, it was found that in the adhesive bodies of Examples 1 to 7 in which the adhesive composition contained the base polymer and the tackifying resin having a weight average molecular weight of 1,500 or less, a reduction in adhesive force after storage was prevented.

In contrast, it was found that in the adhesive body of Comparative Example 1 in which the molecular weight of the tackifying resin contained in the adhesive composition was out of a predetermined range, the adhesive force after storage was significantly reduced.

The present invention is not limited to the embodiments described above, and can be made in various modifications within the scope of the claims, and embodiments obtained by appropriately combining technical methods disclosed in different embodiments are also included in the technical scope of the present invention.

### INDUSTRIAL APPLICABILITY

According to the adhesive body of the present invention, it is possible to provide an adhesive body in which a reduction in adhesive force after the adhesive body is stored and transported is prevented even in a configuration in which a release liner is not provided.

Although the present invention has been described in detail with reference to a specific embodiment, it will be apparent to those skilled in the art that various changes and modifications can be made without departing from the spirit and the scope of the present invention.

The present application is based on a Japanese Patent Application (No. 2022-181324) filed on November 11, 2022, the contents of which are incorporated herein by reference.

### REFERENCE SIGNS LIST

100, 200: wound body
2, 3, 4: adhesive body
11: first adhesive layer
12: second adhesive layer
13: adhesive layer
14: core material
20: substrate

## Claims

1. An adhesive body comprising an adhesive, wherein
an adhesive composition forming the adhesive contains a base polymer and a tackifying resin having a weight average molecular weight of 1,500 or less.

2. The adhesive body according to claim 1, wherein
the tackifying resin has a weight average molecular weight of 1,000 or less.

3. The adhesive body according to claim 1 or 2, further comprising
a core material, wherein
the adhesive covers a surface of the core material in a longitudinal direction.

4. The adhesive body according to claim 1 or 2, wherein
the adhesive body is a threadlike adhesive body.

5. The adhesive body according to claim 3, wherein
the core material is formed of four or more filaments.

6. The adhesive body according to claim 1 or 2, wherein
a content of the tackifying resin in the adhesive composition is 5 parts by mass to 100 parts by mass with respect to 100 parts by mass of the base polymer.
